# EUROPÄISCHE PATENTSCHRIFT

(11) **EP 2 686 648 B1**
(45) Veröffentlichungstag und Bekanntmachung des Hinweises auf die Patenterteilung: **26.11.2014**
(21) Anmeldenummer: 12702430.5
(22) Anmeldetag: 31.01.2012
(51) Int. Cl.: G01G 21/28

(54) **WINDSCHUTZ FÜR EINE PRÄZISIONSWAAGE**
WINDSHIELD FOR A PRECISION BALANCE
COUPE-VENT POUR UNE BALANCE DE PRÉCISION

(30) Priorität: 17.03.2011 DE 102011001354
(43) Veröffentlichungstag der Anmeldung: 22.01.2014
(73) Patentinhaber: Sartorius Lab Instruments GmbH & Co. KG, 37075 Göttingen (DE)
(72) Erfinder: FELDOTTE, Heinrich, 37079 Göttingen (DE); GRAF, Winfried, 37127 Niemetal (DE); HOLST, Heyko, 37085 Göttingen (DE); SCHRADER, Christian, 37194 Bodenfelde (DE)
(86) Internationale Anmeldenummer: PCT/EP2012/000428
(87) Internationale Veröffentlichungsnummer: WO 2012/123053

(56) Entgegenhaltungen:
- DE-U1-202008 017 708

## Beschreibung

Die Erfindung betrifft eine Präzisionswaage mit einem Windschutz, der mindestens ein Wandelement aufweist, das mit einer elektrisch leitfähigen Beschichtung versehen ist, und mit einem elektrischen Anschluss für die Beschichtung.

Aus dem Stand der Technik ist bei Präzisionswaagen grundsätzlich bekannt, dass die Scheiben des Windschutzes leitfähig beschichtet werden, um eventuelle statische Aufladungen, die das Wägeergebnis verfälschen können, abzuleiten.

Aus der DE 20 2008 017 708 U1 ist eine Präzisionswaage bekannt, die zur Wägung von elektrostatisch aufgeladenem Wägegut dient. Dabei ist es für ein präzises Wägeergebnis notwendig, dass alle Wandflächen im Inneren des Wägeraumes der Waage auf demselben elektrischen Potenzial gehalten werden. Zu diesem Zweck sind die Wandelemente durch eine elektrisch leitfähige Schicht leitend und elektrisch miteinander und mit einem Gehäuse verbunden.

Aus der DE 10 2008 008 486 A1 ist ein Windschutz für eine Waage bekannt, bei dem einige Bauteile ohne Werkzeug demontiert werden können, damit sie gereinigt werden können. Eine elektrisch leitfähige Beschichtung von Bauteilen des Windschutzes ist in diesem Dokument allerdings nicht beschrieben.

In der EP 1 195 585 ist schließlich ein motorisch betriebener Windschutz beschrieben, bei dem allerdings auch keine elektrisch leitfähige Beschichtung der Scheiben des Windschutzes vorgesehen ist.

Aus der US 6,239 360 ist eine elektromagnetische Abschirmung bekannt, die als Beschichtung auf einen Substrat ausgeführt ist. Wenn das Substrat an beispielsweise einem elektrischen Gerät angebracht ist, kann mittels eines Meßgeräts geprüft werden, ob die Beschichtung geerdet ist.

Die Aufgabe der Erfindung besteht darin, eine Präzisionswaage der eingangs genannten Art zu schaffen, bei der unbemerkte Verfälschungen des

Wägeergebnisses durch elektrostatische Aufladungen zuverlässig vermieden werden, insbesondere dann, wenn der Windschutz demontierbar ist.

Zur Lösung dieser Aufgabe ist erfindungsgemäß die weage in Anspruch 1 vorgesehen. Bei einer Präzisionswaage der eingangs genannten Art ist eine elektrische Prüfvorrichtung vorgesehen, die in die Präzisionswaage integriert ist und mit der geprüft werden kann, ob die Beschichtung mit dem elektrischen Anschluss verbunden ist. Mit der Prüfvorrichtung kann getestet werden, ob die elektrisch leitfähige Beschichtung der Wandelemente auch korrekt kontaktiert ist. Somit kann vermieden werden, dass sich aufgrund einer unterbrochenen Kontaktierung ein elektrisches Feld aufbaut, das unbemerkt eine Messung oder eine ganze Reihe von Messungen verfälscht. Als Wandelemente im Sinne der Anmeldung werden alle Begrenzungen des Wägeraums angesehen, beispielsweise optisch transparente Scheiben, nicht transparente Wände oder der Boden des Wägeraums.

Vorzugsweise sind als Wandelemente mehrere optisch transparente Scheiben vorgesehen, wobei die Beschichtungen der Scheiben elektrisch verschaltet sind. Dies ermöglicht, mit geringem Aufwand auch bei einem Windschutz, der aus mehreren Scheiben besteht, die korrekte Kontaktierung und damit Erdung sämtlicher Scheiben zu prüfen.

Gemäß einer Ausführungsform ist vorgesehen, dass die Prüfvorrichtung die Impedanz oder den Widerstand zwischen mindestens einem Prüfkontakt, der an der Beschichtung angreift, und dem elektrischen Anschluss bestimmen kann. Der Prüfkontakt kann in technisch einfacher Weise an einer für die jeweilige Funktion günstigen Stelle angeordnet werden.

Gemäß einer bevorzugten Ausführungsform ist vorgesehen, dass mindestens eine der Scheiben zwischen einer geschlossenen und einer geöffneten Stellung verschiebbar ist und dass mindestens einer der Prüfkontakte so angeordnet ist, dass er nur in der geschlossenen Stellung der Scheibe an der elektrisch leitfähigen Beschichtung angreifen kann. Auf diese Weise kann ohne zusätzlichen Aufwand eine weitere Funktion verwirklicht werden, nämlich eine Kontrolle, ob die verschiebbare Scheibe bei einem Wägevorgang auch geschlossen ist.

Vorzugsweise kann die Auflösung der Waage herabgesetzt werden, wenn erkannt wird, dass die verschiebbare Scheibe nicht geschlossen ist, beispielsweise indem die Auflösung um eine Stelle herabgesetzt wird. Dies ermöglicht ein grobes Einwiegen bei geöffneter Scheibe und stabiler bzw. schnellerer Anzeige.

Gemäß einer bevorzugten Ausführungsform der Erfindung ist vorgesehen, dass der Windschutz ein abnehmbarer Windschutz ist, der mehrere Scheiben und einen Halterahmen aufweist. Die erfindungsgemäße Überprüfung der korrekten Kontaktierung der elektrisch leitfähigen Beschichtung der Scheiben ist besonders vorteilhaft bei einem demontierbaren Windschutz, da sich hier das Problem der korrekten Kontaktierung noch stärker stellt als bei einem fest montierten Windschutz. Bei einem demontierbaren Windschutz werden viele Bauteile bei der Montage einfach ineinandergesteckt. Dadurch besteht ein größeres Risiko als bei einem fest montierten Windschutz, dass nach einer Demontage und anschließender Montage eine der Scheiben des Windschutzes elektrisch nicht kontaktiert ist. Durch die erfindungsgemäße Prüfvorrichtung kann automatisch nach der Montage und vor jedem Wägevorgang überprüft werden, ob alle Scheiben wieder korrekt kontaktiert sind. Falls nicht, kann eine Fehlermeldung abgegeben werden. Diese kann sowohl an einen Signalgeber zur optischen oder akustischen Abgabe eines Warnsignals weitergeleitet werden, als auch zur Beeinflussung eines Prozesses, z. B. der Unterbrechung einer automatischen Wägegutzuführung, insbesondere bei motorisch betriebenen Windschutzen, genutzt werden. Es ist auch möglich, die Waage völlig abzuschalten oder nur einen Betrieb mit eingeschränkter Auflösung zu ermöglichen, damit eine eventuelle elektrostatische Aufladung der Scheiben nicht zu fehlerhaften Wägeergebnissen führen.

Gemäß einer Ausführungsform der Erfindung ist vorgesehen, dass der Windschutz eine Vorderscheibe, eine Rückscheibe, einen Halterahmen, der auf der Vorderscheibe und der Rückscheibe aufliegt, zwei Seitenscheiben, die verschiebbar im Halterahmen aufgenommen sind und an die Vorderscheibe und die Rückscheibe angrenzen, und eine Spannvorrichtung aufweist, die den Halterahmen in vertikaler Richtung nach unten beaufschlagt. Auf diese Weise ist ein Windschutz geschaffen, der mit geringem Aufwand demontiert und wieder montiert werden kann. Im demontierten Zustand können alle Einzelteile gut gereinigt werden.

Gemäß einer Ausgestaltung der Erfindung kann vorgesehen sind, dass am Halterahmen mindestens eine elektrisch leitfähiger Kontakt, z. B. eine elektrisch leitfähige Bürste, angebracht ist, die an der elektrisch leitfähigen Beschichtung angreift. Dies ermöglicht eine zuverlässige Kontaktierung auch dann, wenn die entsprechende Scheibe im Halterahmen verschiebbar ist.

Die Erfindung wird nachfolgend anhand verschiedener Ausführungsformen erläutert, die in den beigefügten Zeichnungen dargestellt sind. In diesen zeigen:
- Figur 1 in einer perspektivischen Ansicht einen Windschutz gemäß einer ersten Ausführungsform;
- Figur 2 den Windschutz von Figur 1 in einer zweiten perspektivischen Ansicht;
- Figur 3 das Detail III von Figur 1;
- Figur 4 das Detail IV von Figur 1;
- Figur 5 den Windschutz von Figur 1 in einer Explosionsansicht;
- Figur 6 einen Schnitt entlang der Ebene VI-VI von Figur 5;
- Figur 7 einen Schnitt entlang der Ebene VII-VII von Figur 5;
- Figur 8 schematisch ein Ersatzschaltbild einer Reihenschaltung für die Prüfvorrichtung; und
- Figur 9 schematisch ein Ersatzschaltbild einer Parallelschaltung für die Prüfvorrichtung.

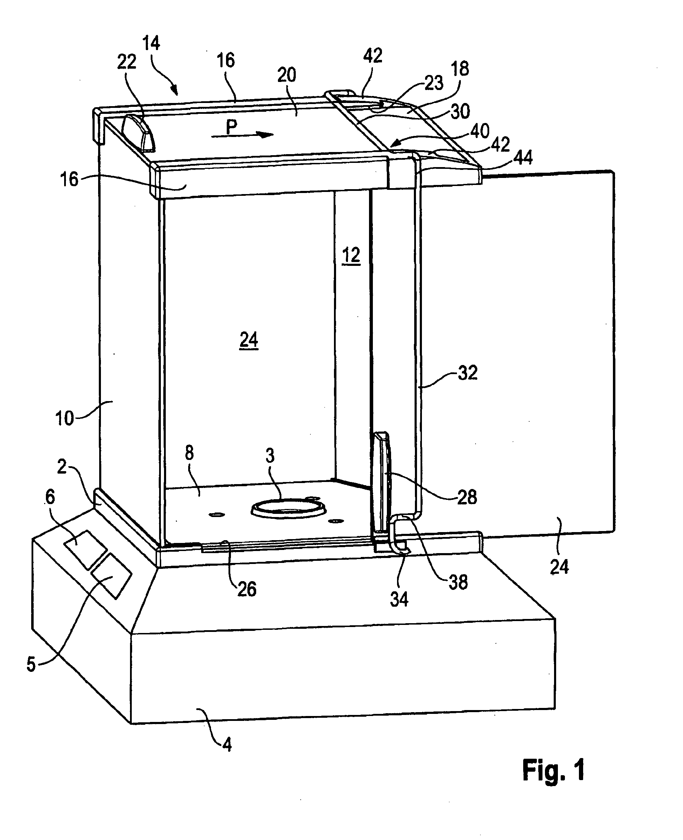

In den Figuren 1 bis 5 ist ein von Hand betätigbarer Windschutz gemäß einer Ausführungsform der Erfindung gezeigt. Der Windschutz ist auf einer Bodenplatte 2 aufgebaut, die einen Durchtritt 3 für eine Waagschale einer Präzisionswaage umgibt. Die Bodenplatte 2 kann fester Teil einer Präzisionswaage sein oder auch ein Anbauteil, das je nach Kundenwunsch an einer Präzisionswaage angebracht wird oder auch nicht. Er beinhaltet einen herausnehmbaren, in der konkreten Ausführungsform leitfähigen Wägeraumboden 8. Weiterhin besteht er aus einer Vorderscheibe 10, mindestens einer Rückscheibe 12, einer beweglichen Deckelscheibe 20 und zwei beweglichen Seitenscheiben 24. Der Wägeraumboden 8, die Vorderscheibe 10, die Rückscheibe 12, die Deckelscheibe 20 sowie die Seitenscheiben 34 werden im Folgenden als Wandelemente bezeichnet.

Bei der gezeigten Ausführungsform befindet sich unterhalb der Bodenplatte 2 ein Gehäuse 4 der Präzisionswaage, in dem die mechanischen, elektrischen und elektronischen Bauteile untergebracht sind. In das Gehäuse 4 sind eine Anzeige 5 für das Wägeergebnis und ein Bedienfeld 6 zur Bedienung der verschiedenen Funktionen der Präzisionswaage integriert.

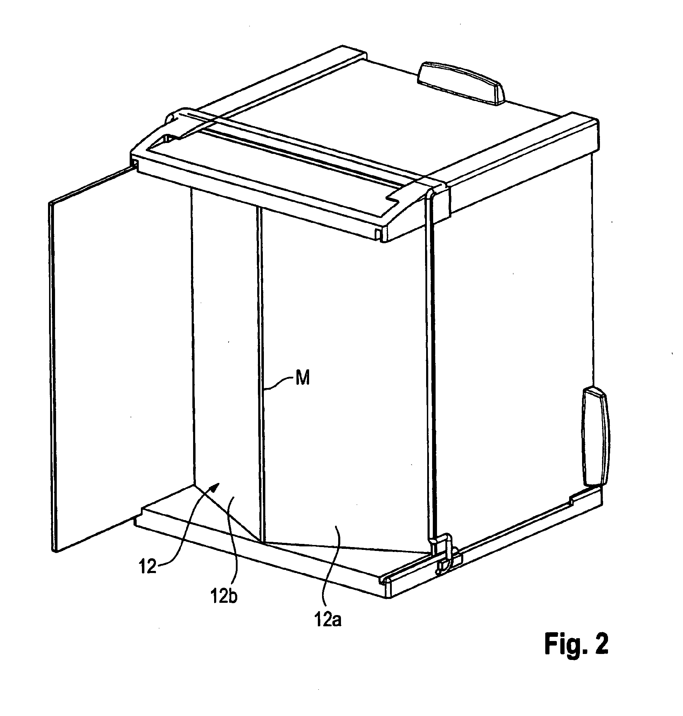

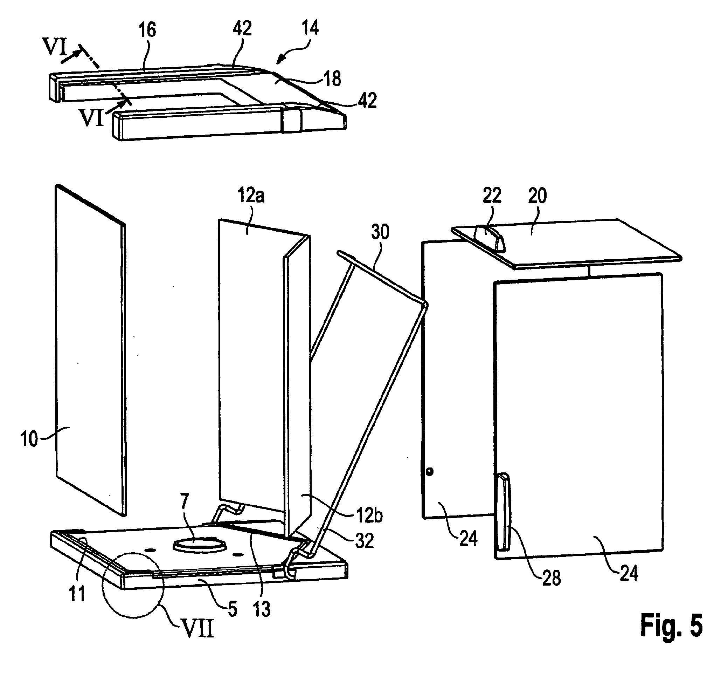

Auf der Bodenplatte sind eine Vorderscheibe 10 und eine Rückscheibe 12 aufgesetzt. Die Vorderscheibe 10 ist rechteckig und eben und mit ihrem unteren Rand in eine Nut 11 der Bodenplatte 2 eingesetzt (siehe Figur 5). Die Rückscheibe 12 ist hier aus zwei Teilscheiben 12a, 12b (siehe insbesondere Figur 2) zusammengesetzt, die sich entlang einer Mittellinie M berühren. Der Winkel zwischen den beiden Teilscheiben 12a, 12b kann in der Größenordnung von 120° betragen. Der Abstand der Mittellinie M von der Ebene der Vorderscheibe 10 ist größer als der Abstand der außen liegenden Seitenränder der Teilscheiben 12a, 12b. Anders ausgedrückt: die Rückscheibe 12 ist, betrachtet vom Durchtritt 3 für die Waagschale aus, konkav ausgeführt. Auch die beiden Teilscheiben 12a, 12b sind in der Bodenplatte in einer Nut 13 aufgenommen. Die Nuten 11, 13 für die Vorderscheibe 10 und die beiden Teilscheiben 12a, 12b der Rückscheibe 12 sind dabei so an die Dicke der Scheiben angepasst, dass die Scheiben dort vorzugsweise ohne Spiel eingesteckt werden können.

Auf die Vorderscheibe 10 und die Rückscheibe 12 ist ein Halterahmen 14 aufgesetzt, der aus zwei parallel zueinander angeordneten Längsstreben 16 und einer quer dazu angeordneten Querstrebe 18 gebildet ist. Die beiden Längsstreben 16 erstrecken sich von der Vorderscheibe 10 zur Rückscheibe 12. Im Bereich der Vorderscheibe 10 ist am Ende jeder Längsstrebe 16 eine Steckaufnahme vorgesehen, in die der obere äußere Randabschnitt der Vorderscheibe 10 eingesteckt werden kann. Im Bereich der Querstrebe 18 ist eine Steckaufnahme für den oberen Rand der beiden Teilscheiben 12a, 12b vorgesehen. Zwischen den beiden Längsstreben ist eine Deckelscheibe 20 angeordnet, die in zwei Schiebenuten 23 relativ zum Halterahmen 14 ausgehend von der in Figur 1 gezeigten geschlossenen Stellung in der Richtung des Pfeils P hin zu einer geöffneten Stellung verschoben werden kann. Um die Betätigung der Deckelscheibe 20 zu erleichtern, ist ein Griff 22 vorgesehen, der hier an dem der Vorderscheibe 12 zugewandten Rand der Deckelscheibe 20 angeordnet ist. An den beiden Längsseiten des Windschutzes sind Seitenscheiben 24 angeordnet, die verschiebbar sind. Zu diesem Zweck ist in der Bodenplatte 2 für jede Seitenscheibe 24 eine Schiebenut 26 vorgesehen, in der die entsprechende Seitenscheibe 24 zwischen einer geschlossenen Stellung, in der sie an der Vorderscheibe 10 anliegt, und einer geöffneten Stellung (siehe die Figuren 1 und 2) verschiebbar ist. Ähnlich wie die Deckelscheibe 20 ist an jeder Seitenscheibe 24 ein Griff 28 vorgesehen, der das Verschieben erleichtert. Zur Führung der Seitenscheiben 24 sind auch am Halterahmen 14 zwei Schiebenuten für die Seitenscheiben vorgesehen, und zwar in der Unterseite der beiden Längsstreben 16.

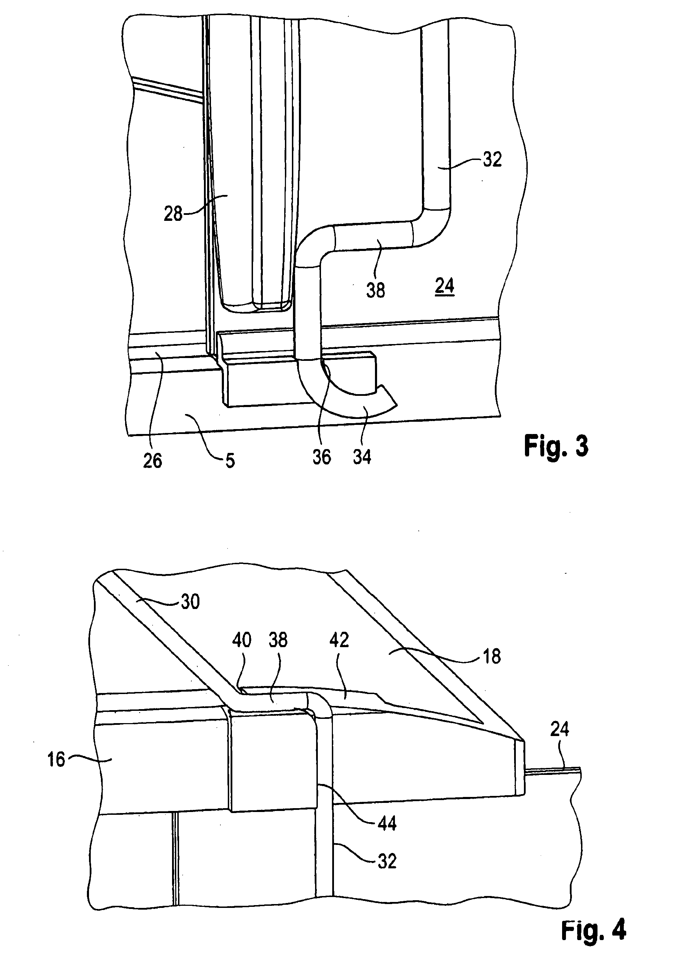

Um den Halterahmen 14 auf den Scheiben des Windschutzes zu arretieren, ist eine Spannvorrichtung vorgesehen, die hier als Spannbügel mit einem Mittelabschnitt 30 und zwei Seitenschenkeln 32 ausgeführt ist. Jeder Seitenschenkel ist mit einem umgebogenen Endabschnitt 34 versehen, der in eine gekrümmte Haltenut 36 eingehängt werden kann, die an der Bodenplatte 2 vorgesehen ist. Weiterhin ist der Spannbügel mit einem Toleranzausgleich in der Form von zwei abgekröpften Federabschnitten 38 versehen, von denen einer in der Nähe des abgebogenen Endabschnittes 34 (siehe insbesondere Figur 3) und der andere im Bereich des Übergangs vom Seitenschenkel 32 zum Mittelabschnitt 30 angeordnet ist. Zur Arretierung des Spannbügels am Halterahmen 14 ist dieser auf seiner Oberseite mit zwei Rastnuten 40 versehen, die im Bereich des Über-gangs von der Querstrebe 18 zu den beiden Längsstreben 16 ausgebildet sind.

Der Windschutz kann sehr einfach und schnell ohne Werkzeug montiert werden. Zunächst werden die Vorderscheibe 10 und die beiden Teilscheiben 12a, 12b auf die Bodenplatte 2 gestellt. Dann wird der Halterahmen 14 aufgesetzt, in den die Deckelscheibe 20 eingeschoben werden kann. Außerdem werden die beiden Seitenscheiben 24 eingeschoben. Anschließend wird die Spannvorrichtung angebracht, die zunächst schräg mit ihren beiden Endabschnitten 34 in die beiden Haltenuten 36 eingefädelt wird (siehe Figur 5). Anschließend wird die Spannvorrichtung nach oben auf den Halterahmen 14 verschwenkt. Dabei rutscht sie über schräg angestellte Führungsflächen 42, während die Federabschnitte 38 elastisch vorgespannt werden, bis der Mittelabschnitt 30 schließlich in die Rastnut 40 einschnappt. Gleichzeitig gelangen die Seitenschenkel in Anlage an Anschläge 44 am Halterahmen. Auf diese Weise ist ein mechanisch stabiles System erhalten, bei dem der Halterahmen 14 an einer Stelle, die zwischen der Mittellinie M und der Vorderscheibe 10 liegt, in vertikaler Richtung elastisch nach unten hin zur Bodenplatte 2 beaufschlagt wird. Der Spannbügel ist dabei so angeordnet, dass er als Anschlag für die Griffe 22, 28 dient.

Es versteht sich von selbst, dass die Seitenscheiben 24 sowie die zu ihrer Führung vorgesehenen Schiebenuten so bemessen sind, dass die vom Spannbügel in vertikaler Richtung ausgeübte Spannwirkung von der Vorderscheibe 10 und der Rückscheibe 12 abgefangen wird und die Seitenscheiben 24 im Wesentlichen reibungsfrei zwischen Bodenplatte 2 und Halterahmen 14 verschoben werden können.

Die Vorderscheibe 10, die Rückscheibe 12, die Deckelscheibe 20 und die Seitenscheiben 24 bestehen aus Glas oder transparentem Kunststoff, wobei im Fall von Kunststoff darauf geachtet werden muss, dass dieser ausreichend widerstandsfähig gegen übliche Reinigungsmittel ist. Der Halterahmen 14 kann aus Kunststoff ausgeführt sein, und der Spannbügel mit seinem Mittelabschnitt 30 und den Seitenschenkeln 32 besteht vorzugsweise aus Metall. Alle Bauteile können leicht wieder demontiert und dann gereinigt werden, indem diese beispielsweise in eine Industrie-Waschmaschine eingelegt werden.

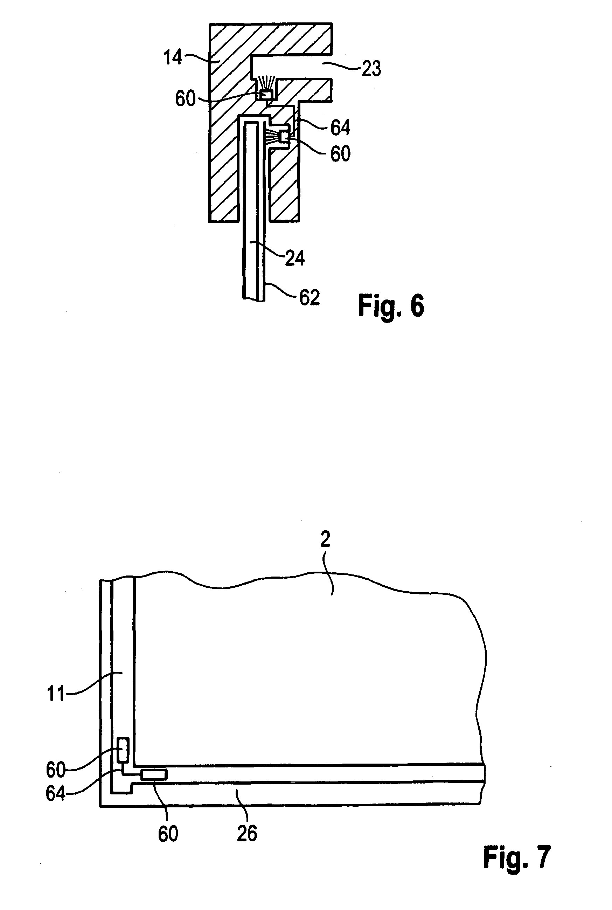

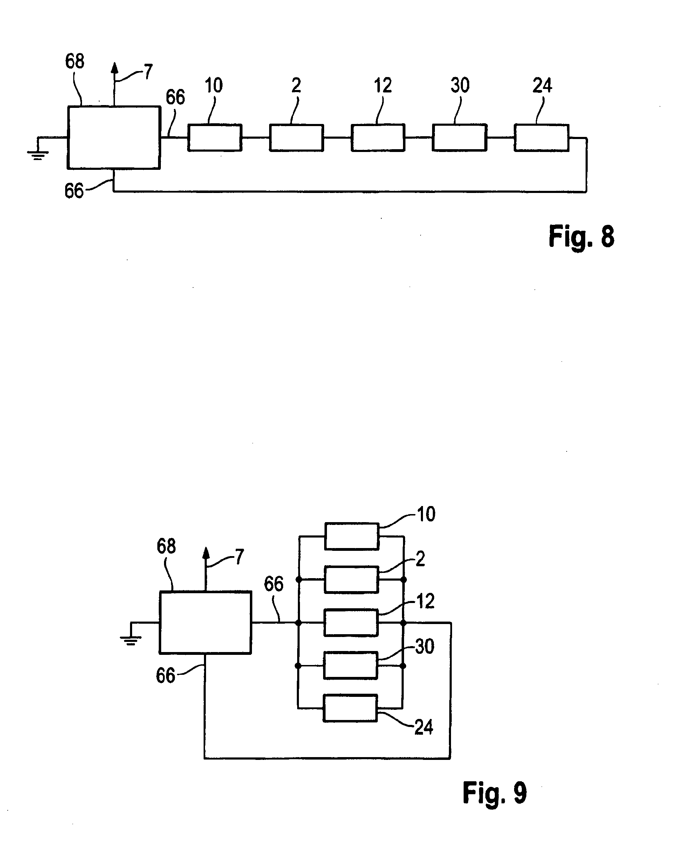

Jedes der Wandelemente 8, 10, 12, 20, 24 des Windschutzes ist mit einer elektrisch leitenden Beschichtung versehen, wobei alle Wandelemente elektrisch miteinander verschaltet sind Diese Verschaltung kann entweder parallel oder auch in Reihe erfolgen (siehe hierzu Ersatzschaltbilder in Figur 8 bzw. Figur 9). Die Kontaktierung der elektrischen Beschichtungen der Wandelemente erfolgt durch kleine Bürsten 60, beispielsweise Kohlefaserbürsten, die an geeigneten Stellen entlang der Führungen für die beweglichen Wandelemente angebracht sind. In Figur 6 sind beispielhaft zwei Bürsten 60 gezeigt, von denen eine am Rand der Schiebenut 23 für das Wandelement 20 und die andere am Rand der Schiebeführung für die Wandelemente 24 angeordnet ist. In Figur 6 ist auch schematisch eine elektrisch leitende Beschichtung 62 auf dem Wandelement 24 dargestellt, an der die Bürste 60 angreift. Weiterhin ist ein elektrischer Leiter 64 zu sehen, der die beiden Bürsten elektrisch miteinander verbindet. Auf diese Weise kann eine elektrische Verschaltung aller Wandelemente hergestellt werden.

In Figur 7 ist zu sehen, dass die Bürste 60, die in der Schiebenut 26 für das Wandelement 24 angeordnet ist, am Ende der entsprechenden Schiebenut angeordnet ist, und zwar an dem Ende, an dem sich der mit dem Griff 28 versehene Rand des Wandelementes 24 befindet, wenn das Wandelement 24 vollständig geschlossen ist. Dies führt dazu, dass ein durchgehender elektrischer Kontakt durch alle Wandelemente nur dann hergestellt wird, wenn die Wandelemente 24 sich in ihrer geschlossenen Stellung befinden. Eine ähnliche Überwachung kann auch für das Wandelement 20 vorgenommen werden, indem dort die Kontaktierung der elektrisch leitenden Beschichtung an einer Stelle vorgesehen ist, die nur bei geschlossenem Wandelement 20 erreicht wird.

Die elektrisch leitenden Beschichtungen 62 sind miteinander verschaltet und über die Kontakte 66 mit der Prüfvorrichtung 68 verbunden. Die elektrische Prüfvorrichtung 68 ist in die Präzisionswaage integriert und überprüft, ob sämtliche elektrisch leitenden Beschichtungen korrekt kontaktiert sind. Dies kann insbesondere durch eine Impedanz- oder Widerstandsmessung erfolgen. Falls erkannt wird, dass mindestens eine Beschichtung eines Wandelementes nicht kontaktiert ist, kann die Prüfvorrichtung 68 über den Ausgang 7 einen Wamhinweis bereitstellen oder ein Signal zur Beeinflussung eines nebengeordneten Prozesses, beispielsweise der Unterbrechung einer automatischen Zuführung von Wägegut aussenden. Dadurch wird der Bediener veranlasst, den Windschutz dahingehend zu überprüfen, wo die Kontaktkette unterbrochen sein könnte. Gleichzeitig kann die Prüfvorrichtung 68 die Waage vollständig ausschalten oder nur einen eingeschränkten Betrieb ermöglichen.

Weiterhin kann die Prüfvorrichtung 68 so ausgestaltet sein, dass sie erkennt, ob sämtliche Wandelemente des Windschutzes geschlossen sind. Falls sie erkennt, dass eines der Wandelemente geöffnet ist, kann beispielsweise die Auflösung der Anzeige 5 herabgesetzt werden, beispielsweise um eine Zehnerpotenz, sodass bei geöffnetem Wandelement ein grober Einwägevorgang bei stabiler Anzeige vorgenommen werden kann, jedoch erst bei geschlossenem Wandelement das präzise Wägeergebnis abgelesen werden kann.

Es ist auch möglich, eine Bürste vorzusehen, die immer mit dem entsprechenden Wandelement in Verbindung steht, und eine zweite, die ausschließlich dazu dient zu erfassen, ob das Wandelement sich in der geschlossenen Stellung befindet. In diesem Fall muss die Prüfvorrichtung eine Reihenschaltung der Wandelemente überwachen und zusätzlich die Bürste abfragen, die zur Erfassung der geschlossenen Stellung dient.

### Bezugszeichenliste

- 2: Bodenplatte
- 3: Durchtritt Waagschale
- 4: Gehäuse
- 5: Anzeige
- 6: Bedienfeld
- 7: Ausgang
- 8: Wandelement
- 10: Wandelement
- 11: Nut
- 12: Wandelement
- 13: Nut
- 14: Halterahmen
- 16: Längsstrebe
- 18: Querstrebe
- 20: Deckelscheibe
- 22: Griff
- 23: Schiebenut
- 24: Wandelement
- 26: Schiebenut
- 28: Griff
- 30: Mittelabschnitt
- 32: Seitenschenkel
- 34: Endabschnitt
- 36: Haltenut
- 38: Federabschnitt
- 40: Rastnut
- 42: Führungsfläche
- 44: Anschlag
- 46: Auflagefläche
- 48: Rasthaken
- 50: Rastverzahnung
- 52: Handhabungslasche
- 54: Öffnung
- 56: Haltebolzen
- 60: Bürste
- 62: Beschichtung
- 64: Leiter
- 66: Anschluss
- 68: Prüfvorrichtung
- M: Mittellinie

## Patentansprüche

1. Präzisionswaage mit einem Windschutz, der mindestens ein Wandelement (8, 10, 12, 20, 24) aufweist, die mit einer elektrisch leitfähigen Beschichtung (62) versehen ist, und mit einem elektrischen Anschluss (66) für die Beschichtung, **dadurch gekennzeichnet, dass** eine elektrische Prüfvorrichtung (68) vorgesehen ist, die in die Präzisionswaage integriert ist und mit der geprüft werden kann, ob die Beschichtung (62) mit dem elektrischen Anschluss (66) verbunden ist.

2. Präzisionswaage nach Anspruch 1, **dadurch gekennzeichnet, dass** mehrere Wandelemente (8, 10, 12, 20, 24) vorgesehen sind und dass die Beschichtungen (62) der Wandelemente (8, 10, 12, 20, 24) elektrisch in Reihe geschaltet sind.

3. Präzisionswaage nach Anspruch 1, **dadurch gekennzeichnet, dass** mehrere Wandelemente (8, 10, 12, 20, 24) vorgesehen sind und dass die Beschichtungen (62) der Wandelemente (8, 10, 12, 20, 24) elektrisch parallelgeschaltet sind.

4. Präzisionswaage nach einem der vorhergehenden Ansprüche, **dadurch gekennzeichnet, dass** die elektrische Prüfvorrichtung (68) bei Fehlen der Kontaktierung der Beschichtung mindestens eines Wandelementes (8, 10, 12, 20, 24) ein Signal zur Abgabe eines optischen oder akustischen Warnsignals oder zur Unterbrechung eines nebengeordneten Prozesses aussendet.

5. Präzisionswaage nach Anspruch 1, **dadurch gekennzeichnet, dass** die Prüfvorrichtung (68) den Widerstand zwischen mindestens einem Prüfkontakt (60), der an der Beschichtung (62) angreift, und dem elektrischen Anschluss (66) bestimmen kann.

6. Präzisionswaage nach Anspruch 5, **dadurch gekennzeichnet, dass** mindestens ein Wandelement (8, 10, 12, 20, 24) zwischen einer geschlossenen und einer geöffneten Stellung verschiebbar ist und dass mindestens einer der Prüfkontakte (60) so angeordnet ist, dass er nur in der geschlossenen Stellung des Wandelementes (8, 10, 12, 20, 24) an der elektrisch leitfähigen Beschichtung (62) angreifen kann.

7. Präzisionswaage nach Anspruch 6, **dadurch gekennzeichnet, dass** die Auflösung der Waage herabgesetzt wird, wenn erkannt wird, dass die verschiebbaren Wandelemente (8, 10, 12, 20, 24) nicht geschlossen ist.

8. Präzisionswaage nach einem der vorhergehenden Ansprüche, **dadurch gekennzeichnet, dass** der Windschutz ein demontierbarer Windschutz ist, der mehrere Wandelemente (8, 10, 12, 20, 24) und einen Halterahmen (14) aufweist.

9. Präzisionswaage nach Anspruch 8, **dadurch gekennzeichnet, dass** der Windschutz eine Vorderscheibe (10), eine Rückscheibe (12), einen Halterahmen (14), der auf der Vorderscheibe (10) und der Rückscheibe (12) aufliegt, zwei Seitenscheiben (24), die verschiebbar im Halterahmen (14) aufgenommen sind und an die Vorderscheibe (10) und die Rückscheibe (12) angrenzen, und eine Spannvorrichtung (30, 32) aufweist, die den Halterahmen (14) in vertikaler Richtung nach unten beaufschlagt.

10. Präzisionswaage nach Anspruch 9, **dadurch gekennzeichnet, dass** am Halterahmen (14) mindestens eine elektrisch leitfähige Bürste (60) angebracht ist, die an der elektrisch leitfähigen Beschichtung (62) angreift.

## Claims

1. Precision weighing machine with a wind protector, which comprises at least one wall element (8, 10, 12, 20, 24) provided with an electrically conductive coating (62), and an electrical connection (66) for the coating, **characterised in that** an electrical test device (68) is provided, which is integrated in the precision weighing machine and by which it can be tested whether the coating (62) is connected with the electrical connection (66).

2. Precision weighing machine according to claim 1, **characterised in that** a plurality of wall elements (8, 10, 12, 20, 24) is provided and that the coatings (62) of the wall elements (8, 10, 12, 20, 24) are electrically connected in series.

3. Precision weighing machine according to claim 1, **characterised in that** a plurality of wall elements (8, 10, 12, 20, 24) is provided and that the coatings (62) of the wall elements (8, 10, 12, 20, 24) are electrically connected in parallel.

4. Precision weighing machine according to any one of the preceding claims, **characterised in that** the electrical test device (68) in the absence of electrical contact with the coating of at least one wall element (8, 10, 12, 20, 24) issues a signal for output of an optical or acoustic warning signal or for interruption of a co-ordinated process.

5. Precision weighing machine according to claim 1, **characterised in that** the test device (68) can determine the resistance between at least one test contact (60), which is applied to the coating (62), and the electrical connection (66).

6. Precision weighing machine according to claim 5, **characterised in that** at least one wall element (8, 10, 12, 20, 24) is displaceable between a closed setting and an open setting and that at least one of the test contacts (60) is so arranged that it can be applied to the electrically conductive coating (62) only in the closed setting of the wall element (8, 10, 12, 20, 24).

7. Precision weighing machine according to claim 6, **characterised in that** the resolution of the weighing machine is reduced if it is recognised that the displaceable wall element (8, 10, 12, 20, 24) is not closed.

8. Precision weighing machine according to any one of the preceding claims, **characterised in that** the wind protector is a demountable wind protector comprising a plurality of wall elements (8, 10, 12, 20, 24) and a mounting frame (14).

9. Precision weighing machine according to claim 8, **characterised in that** the wind protector comprises a front pane (10), a rear pane (12), a mounting frame (14) resting on the front pane (10) and the rear pane (12), two side panes (24) which are received in the mounting frame (14) to be displaceable and which adjoin the front pane (10) and the rear pane (12), and a clamping device (30, 32) acting on the mounting frame (14) downwardly in vertical direction.

10. Precision weighing machine according to claim 9, **characterised in that** at least one electrically conductive brush (60), which is applied to the electrically conductive coating (62), is mounted on the mounting frame (14).

## Revendications

1. Balance de précision comprenant une protection contre les courants d'air qui présente au moins un élément de paroi (8, 10, 12, 20, 24), qui est pourvu d'un revêtement (62) électriquement conducteur, et comprenant un raccordement électrique (66) pour le revêtement, **caractérisée en ce qu'**un dispositif de contrôle (68) électrique, qui est intégré dans la balance de précision, est prévu, et à l'aide duquel il peut être vérifié si le revêtement (62) est relié avec le raccordement électrique (66).

2. Balance de précision selon la revendication 1, **caractérisée en ce que** plusieurs éléments de paroi (8, 10, 12, 20, 24) sont prévus et que les revêtements (62) des éléments de paroi (8, 10, 12, 20, 24) sont connectés électriquement en série.

3. Balance de précision selon la revendication 1, **caractérisée en ce que** plusieurs éléments de paroi (8, 10, 12, 20, 24) sont prévus et que les revêtements (62) des éléments de paroi (8, 10, 12, 20, 24) sont connectés électriquement en parallèle.

4. Balance de précision selon l'une des revendications précédentes, **caractérisée en ce que** le dispositif de contrôle (68) électrique émet un signal pour la délivrance d'un signal d'alarme optique ou acoustique ou pour l'interruption d'un processus coordonné lors d'un défaut de connexion du revêtement d'au moins un élément de paroi (8, 10, 12, 20, 24).

5. Balance de précision selon la revendication 1, **caractérisée en ce que** le dispositif de contrôle (68) peut déterminer la résistance entre au moins un contact de contrôle (60), qui touche le revêtement (62), et le raccordement électrique (66).

6. Balance de précision selon la revendication 5, **caractérisée en ce qu'**au moins un élément de paroi (8, 10, 12, 20, 24) peut être repoussé entre une position fermée et une position ouverte et qu'au moins un des contacts de contrôle (60) est disposé de telle manière qu'il ne peut toucher le revêtement (62) électriquement conducteur uniquement dans la position fermée de l'élément de paroi (8, 10, 12, 20, 24).

7. Balance de précision selon la revendication 6, **caractérisée en ce que** la résolution de la balance est diminuée lorsqu'il apparaît que les éléments de paroi (8, 10, 12, 20, 24) coulissants ne sont pas fermés.

8. Balance de précision selon l'une des revendications précédentes, **caractérisée en ce que** la protection contre les courants d'air est une protection démontable, qui présente plusieurs éléments de paroi (8, 10, 12, 20, 24) et un cadre de maintien (14).

9. Balance de précision selon la revendication 8, **caractérisée en ce que** la protection contre les courants d'air présente une vitre avant (10), une vitre arrière (12) un cadre de maintien (14), qui repose sur la vitre avant (10) et la vitre arrière (12), deux vitres latérales (24), qui sont logées en pouvant coulisser dans le cadre de maintien (14) et qui sont délimitées par la vitre avant (10) et la vitre arrière (12), et un dispositif de serrage (30, 32) qui sollicite le cadre de maintien (14) vers le bas en direction verticale.

10. Balance de précision selon la revendication 9, **caractérisée en ce qu'**au moins une brosse (60) électriquement conductrice, qui touche le revêtement (62) électriquement conducteur, est rapportée sur le cadre de maintien (14).
